**Europäisches Patentamt**

**European Patent Office**

**Office européen des brevets**

(19)

(11) Veröffentlichungsnummer : **0 135 190**
**B1**

(12) **EUROPÄISCHE PATENTSCHRIFT**

(45) Veröffentlichungstag der Patentschrift :
02.12.87

(51) Int. Cl.⁴ : **H 02 M 3/156**

(21) Anmeldenummer : **84110881.4**

(22) Anmeldetag : **12.09.84**

(54) **Schaltregler mit einem Komparator, dem eine periodische Vergleichsgrösse mit vorgegebenem zeitlichen Verlauf zugeführt ist.**

(30) Priorität : **14.09.83 DE 3333223**

(43) Veröffentlichungstag der Anmeldung :
**27.03.85 Patentblatt 85/13**

(45) Bekanntmachung des Hinweises auf die Patenterteilung : **02.12.87 Patentblatt 87/49**

(84) Benannte Vertragsstaaten :
**AT BE CH DE FR GB IT LI NL SE**

(56) Entgegenhaltungen :
**EP-A- 0 014 833**
**FR-A- 2 360 126**
**US-A- 4 096 414**

(73) Patentinhaber : **Siemens Aktiengesellschaft Berlin und München**
**Wittelsbacherplatz 2**
**D-8000 München 2 (DE)**

(72) Erfinder : **Schott, Heinrich, Dipl.-Ing.**
**Seebergerstrasse 6a**
**D-8000 München 71 (DE)**

## Beschreibung

Die Erfindung bezieht sich auf einen wie im Oberbegriff des Patentanspruchs 1 angegebenen Schaltregler mit einem Komparator, dem eine periodische Vergleichsgröße mit vorgegebenem zeitlichen Verlauf zugeführt ist.

Ein derartiger Schaltregler ist bereits aus der US-PS 3 377 546 bekannt.

Der bekannte Schaltregler enthält in einem Längszweig einen Schalttransistor als Stellglied und eine Steuerschaltung mit einem Taktgeber, wobei durch Überlagerung einer dreieckförmigen Hilfsspannung mit einer Meßspannung eine rechteckförmige Steuerspannung konstanter Periodendauer und veränderbarem Tastverhältnis erzeugt wird. Um den Regelbereich des Schaltreglers, d. h. den Einstellbereich des Tastverhältnisses zu vergrößern, erzeugt eine Kippstufe eine rechteckförmige Steuerspannung mit großer Flankensteilheit, die ein rasches Schalten des Transistors gewährleistet. Der Arbeitsbereich erstreckt sich von einer Grenzlage zur anderen : Der Transistor kann auch dauernd leitend oder dauernd gesperrt sein.

Allerdings ist es bei der üblichen Anwendung eines Schaltreglers zur Spannungsregelung nicht erforderlich, eine zwischen einem Maximalwert und Null kontinuierlich veränderbare Speisespannung zuzuführen, weil hier entweder bei endlichem Lastwiderstand eine konstante Spannung geliefert werden soll oder der Spannungswert Null nur beim Wert Null des Lastwiderstandes mit einem Kurzschlußstrom, der in der Regel gleich oder größer als der Nennstrom ist, erreicht werden muß.

Untersuchungen im Rahmen der Erfindung haben jedoch ergeben, daß sich bei einem Schaltregler, der als Vergleichsspannung eine Dreiecksspannung verwendet, dadurch Schwierigkeiten ergeben können, daß eine bestimmte gleiche Änderung der Reglerspannung bei kleinem Tastgrad prozentual erheblich größere Änderungen hervorruft als bei großen Tastwerten und daß sich hierdurch Probleme hinsichtlich der Stabilität insbesondere dann ergeben können, wenn die Verstärkung eines Regelvergleichers entsprechend der erforderlichen Genauigkeit im Bereich großer Tastgrade festgelegt wird.

Aus der EP-A-14 833 ist bereits ein Schaltregler bekannt, bei dem eine bistabile Kippstufe durch Taktimpulse setzbar und durch einen meßgrößengesteuerten Komparator rücksetzbar ist. Am Pluseingang des Komparators liegt eine feste Vergleichsspannung. Dem Istwert-Eingang ist ein sowohl an die Eingangsspannung als auch an die Ausgangsspannung angeschlossenes RC-Netzwerk vorgeschaltet. Das Netzwerk enthält einen Kondensator, der Bestandteil eines Differenziergliedes ist und an dem eine Dreiecksspannung erzeugt wird, deren zeitlicher Verlauf von der Eingangsspannung und dem Tastgrad abhängt. Der Kondensator wird abwechselnd aus einer der Eingangsspannung proportionalen Spannung aufgeladen und gegen die konstant zu haltende Ausgangsspannung entladen. Die Dreiecksspannung ist daher aus zeitlich aufeinanderfolgenden e-Funktionen zusammengesetzt.

Aus der DE-A-20 32 949 ist bereits ein Verfahren zur Linearisierung des zeitlichen Mittelwertes einer phasenanschnittsgesteuerten Wechselspannung mit dem Steuerwinkel bekannt, bei der eine nichtlineare Steuerkennlinie verwendet wird. Bei der zur Durchführung des Verfahrens dienenden Schaltungsanordnung ist dem Eingang eine einphasige sinusförmige Wechselspannung zugeführt. An diese Wechselspannung ist die Reihenschaltung einer Last und eines als Thyristorwechselstromsteller verwendeten bipolaren Thyristors angeschlossen. Die phasenanschnittssteuernde Stellerfunktion ergibt sich durch phasengerecht der Steuerelektrode zugeführte Zündimpulse, die von einem Spannungsvergleicher erzeugt werden. Dem Spannungsvergleicher ist an einem ersten Eingang eine Vergleichsspannung und am zweiten Eingang eine Gleichspannung zugeführt, die in jeder Halbperiode der Wechselspannung ausgehend von Null s-förmig bis zu einem Maximalwert ansteigt und am Ende der Halbperiode wieder auf Null zurückspringt. Diese Spannung wird mit einem Konstantgleichstromgenerator erzeugt, der von einem Teil der vollweggleichgerichteten Wechselspannung gesteuert ist.

Die nichtlineare Stuerkennlinie ist so gewählt, daß gleiche Änderungen des Steuerwinkels betragsmäßig gleiche Änderungen des Gleichspannungsmittelwertes aus der sinusförmigen, speisenden Wechselspannung erzeugen. Hieraus ergibt sich, daß eine bestimmte gleiche Änderung der Steuerspannung im unteren Teil des Stellbereiches prozentual erheblich größere Änderungen hervorruft als im oberen Bereich des Stellbereiches.

Aufgabe der Erfindung ist es, einen Schaltregler der eingangs genannten Art derart auszubilden, daß er zugleich bei kleinen Ausgangsleistungen kontinuierlich und genau arbeitet und im gesamten Regelbereich ein stabiles Verhalten aufweist.

Gemäß der Erfindung wird der Schaltregler zur Lösung dieser Aufgabe in der im kennzeichnenden Teil des Patentanspruchs 1 angegebenen Weise ausgebildet.

Dabei wird durch eine nichtlineare Vergleichsspannung am Regelumsetzer der Einfluß des Arbeitspunktes auf die Wirksamkeit des Reglers ausgeglichen.

Der zeitliche Verlauf der Vergleichsgröße wird zweckmäßigerweise so gewählt, daß sich im gesamten Regelbereich eine vorgegebene Abhängigkeit der prozentualen Änderung des Tastverhältnisses von einer vorgegebenen Änderung der zu regelnden Größe ergibt. Auf diese Weise läßt sich in vorteilhafter Weise auch im Bereich kleiner Tastverhältnisse bei kontinuierlichem Arbeiten des Reglers eine vorgegebene Regelgenauigkeit erzielen.

In Weiterbildung der Erfindung besteht der Vergleichsgrößengeber aus einem Rechteckgenerator mit daran angeschlossenem Impulsformer.

Der Impulsformer kann aus mehreren RC-Gliedern zusammengesetzt sein, deren Ausgänge über Entkopplungsdioden parallelgeschaltet sind, so daß sich die gewünschte Impulsform durch Aneinanderfügung der Ladekurven mehrerer RC-Glieder bzw. Überlagerung zweier Dreieckspannungen ergibt.

In Weiterbildung der Erfindung enthält der Impulsformer eine Serienschaltung aus einem Widerstand, aus einer RC-Parallelschaltung und aus einem weiteren Kondensator, so daß in vorteilhafter Weise keine Entkopplungsdioden erforderlich sind.

Das Einschalten des elektronischen Schalters durch den Rechteckgenerator und das Ausschalten durch den Komparator wird zweckmäßigerweise dadurch erreicht, daß der Ausgang des Rechteckgenerators über einen Entkopplungswiderstand und der als Offener-Kollektor-Ausgang ausgebildete Ausgang des Komparators unmittelbar an den Eingang des elektronischen Schalters geführt sind. Dabei dient als elektronischer Schalter insbesondere ein FET mit vorgeschaltetem Treiber.

In Weiterbildung der Erfindung wird der Schaltregler derart ausgebildet, daß der Taktgeber zum periodischen Einschalten des elektronischen Schalters einen Komparator enthält, dessen Eingänge an den Rechteckgenerator und an eine Hilfsspannungsquelle angeschlossen sind. Dabei wird eine zwangsläufige Kompensation von Schaltzeiten durch gegenläufige Ansteuerung zweier Komparatoren erzielt.

Durch diese Maßnahmen dergibt sich der wesentliche Vorteil, daß Schaltzeiten des Komparators, der die verstärkte Regelabweichung mit der Vergleichsgröße vergleicht, kompensiert werden, so daß die vorteilhaften Eigenschaften des Schaltreglers im Bereich sehr kleiner Regelgrößen voll ausgenutzt werden können.

Der zum Taktgeber gehörende Komparator kann seine Hilfsspannung aus einem Spannungsteiler erhalten, der an die Eingangsspannung angeschlossen ist. Eine besonders vorteilhafte Lösung besteht andererseits darin, daß die Hilfsspannungsquelle durch den Kondensator der Serienschaltung des Impulsformers gebildet ist.

Bei einer bevorzugten Verwendung des Schaltreglers sind der Verbraucher ein Peltier-Element und die Konstant zu haltende Regelgröße die Temperatur eines durch das Peltier-Element kühlbaren Körpers. Dabei ergibt sich der besondere Vorteil, daß bei konstantem Lastwiderstand des Peltier-Elements der Spannungsbereich vom Wert Null aus ohne Sprungstelle kontinuierlich durchfahren werden kann.

Bei Sendern für Nachrichtenübertragungseinrichtungen, die als Übertragungsmedium Lichtwellenleiter verwenden, kann es erforderlich sein, die Laserdioden mittels Peltier-Elementen zu kühlen und über eine Regeleinrichtung, die als Sensor einen Heißleiter enthält, auf konstanter Temperatur zu halten. Um einen möglichst hohen Gesamtwirkungsgrad der Anordnung zu erzielen, wird das Peltier-Element vorteilhaft durch einen Schaltregler als Regelstrecke gespeist. Das Peltier-Element stellt einen konstanten Lastwiderstand dar, dem entsprechend der notwendigen Kühlwirkung eine zwischen einem Maximalwert und Null kontinuierlich veränderbare Speisespannung zugeführt werden muß.

Der Schaltregler arbeitet in vorteilhafter Weise auch bei geringer Leistungsabgabe an das Peltier-Element einwandfrei. Es ist daher nicht erforderlich, für die Speisung des Peltier-Elementes einen linearen Transistor-regler, der bekanntlich einen schlechten Wirkungsgrad aufweist, zu verwenden.

Die Erfindung wird anhand der in den Figuren dargestellten Ausführungsbeispiele näher erläutert.

Es zeigen

Fig. 1 einen Schaltregler mit einem Peltier-Element als Lastwiderstand und einer Anordnung zur Erzeugung einer nichtlinearen Vergleichsspannung.

Fig. 2 einen Schaltregler, der ausgehend von Fig. 1 einen zusätzlichen Komparator enthält.

Die Fig. 3 und 4 zeigen den Spannungsverlauf am Komparator und am Schalttransistor, und zwar

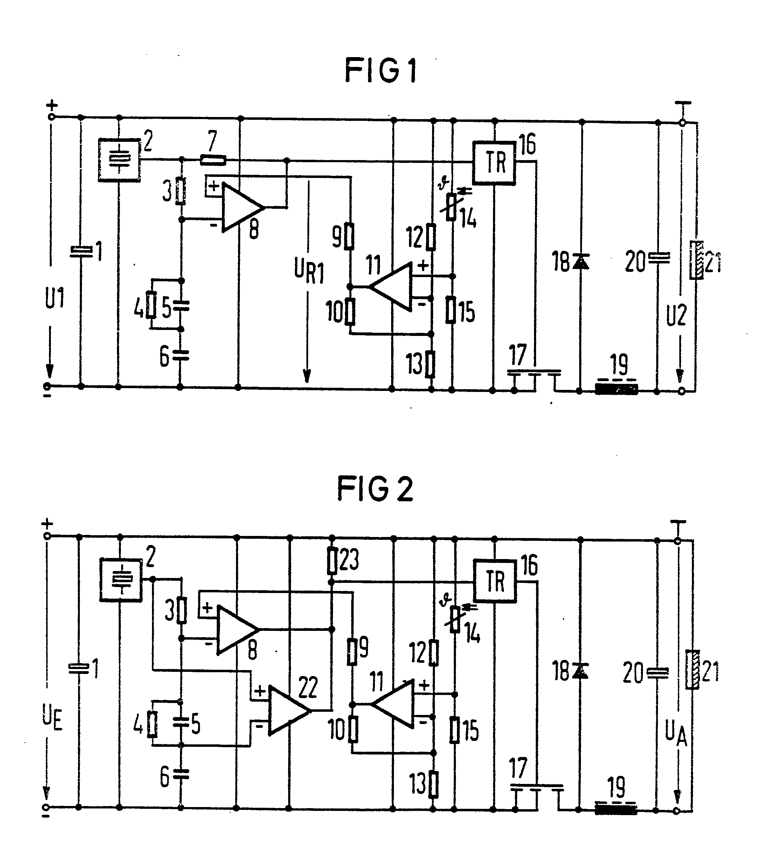

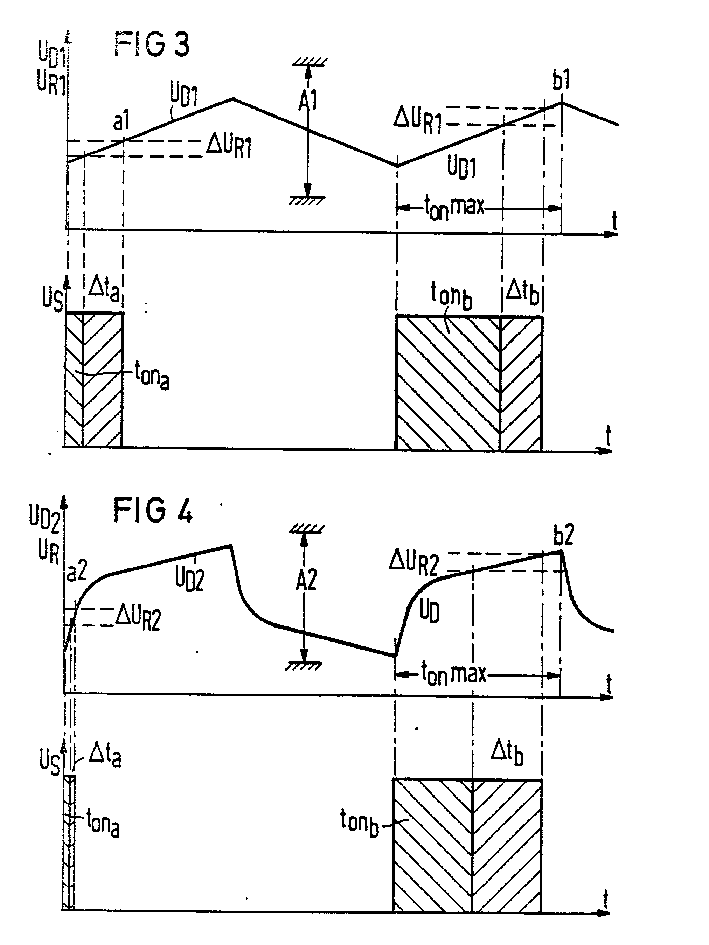

Fig. 3 für einen Schaltregler nach Fig. 1, jedoch ohne Anordnung zur Erzeugung einer zeitlich nichtlinearen Vergleichsspannung und

Fig. 4 für einen Schaltregler nach Fig. 2.

Bei dem in Fig. 1 gezeigten Schaltregler liegt am Eingang der Speicherkondensator 1. Der Pluspol des Eingangs ist unmittelbar mit dem geerdeten Pluspol des Ausgangs verbunden. Der Minuspol des Eingangs ist über die Drain-Source-Strecke des Feldeffekttransistors 17 und über die Drossel 19 an den Minuspol des Ausgangs geführt.

Am Ausgang liegt der Siebkondensator 20 und parallel dazu als Lastwiderstand das Peltier-Element 21. Der Verbindungspunkt des Feldeffekttransistors mit der Drossel 19 ist über die im Durchlaß gepolte Freilaufdiode 18 mit Masse verbunden.

Die Steuerelektrode des Feldeffekttransistors 17 ist an die Treiberschaltung 16 angeschlossen. Der Eingang der Treiberschaltung 16 liegt unmittelbar am Ausgang des Komparators 8.

Der Komparator 8 ist an seinem Minuseingang mit der Vergleichsspannung $U_D$ und an seinem Pluseingang mit der Regelspannung $U_R$ beaufschlagt.

Die Vergleichsspannung $U_{D2}$ wird mit Hilfe einer an den Gegentaktausgang des Rechteckgenerators 2 angeschlossenen RC-Anordnung gewonnen. Diese RC-Anordnung ist eine Serienschaltung, bestehend aus dem Widerstand 3, aus der aus dem Widerstand 4 und dem Kondensator 5 bestehenden Parallelschaltung und aus dem Kondensator 6. Die Vergleichsspannung $U_{D2}$ ist vom Verbindungspunkt des Widerstandes 3 mit der Parallelschaltung 4, 5 an den Minuseingang des Komparator 8 geführt.

Die Reglerspannung $U_R$ gelangt vom Ausgang des Differenzverstärkers 11 über den Widerstand 9 an den Pluseingang des Komparators 8. Der Komparator 8 hat einen Offenen-Kollektor-Ausgang.

Der Differenzverstärker 11 ist ein gegengekoppelter Operationsverstärker. Der Gegenkopplungswiderstand 10 ist zwischen dem Ausgang und dem Minuseingang angeordnet. Der Minuseingang des Differenzverstärkers 11 liegt am Abgriff des aus den Widerständen 12 und 13 bestehenden, an die Eingangsspannung U1 angeschlossenen Spannungsteilers. Der Pluseingang des Differenzverstärkers 11 ist an einen Spannungsteiler angeschlossen, der an der Eingangsspannung U1 liegt und aus dem Temperaturfühler 14 und dem Widerstand 15 besteht. Der Temperaturfühler 14 ist ein Widerstand mit negativem Temperaturkoeffizienten.

Der Rechteckgenerator 2, der Komparator 8, der Differenzverstärker 11 und die Treiberschaltung 16 sind mit ihren Speisespannungsanschlüssen jeweils an die Eingangsspannung U1 angeschlossen. Als Bezugspotential für den Regelumsetzer 8, den Regelvergleicher 11 und die Treiberschaltung 16 dient jeweils der Minuspol der Eingangsspannung U1.

Als Treiberschaltung 16 dient insbesondere ein Buffer-Baustein in CMOS-Technik.

Der Komparator 8 hat am Ausgang den Zustand hochohmig bzw. HIGH oder niederohmig gegen Minuspotential — bzw. LOW.

Der Rechteckgenerator 2 liefert eine Rechteckspannung mit dem Tastverhältnis bzw. Impuls-Pausen-Verhältnis von etwa 1 : 1.

Während der Impulspause gelangt negatives Potential — bzw. LOW über den Widerstand 7 und die Treiberschaltung 16 zum Feldeffekttransistor 17, so daß dieser gesperrt ist.

Zu Beginn des positiven Impulses gelangt über den Widerstand 7 und die nicht invertierende Treiberschaltung 16 Einschaltpotential zur Steuerelektrode des Feldeffekttransistors 17.

Der Ausgang des Komparators 8 ist zunächst hochohmig. Übersteigt die Vergleichsspannung $U_{D2}$ die Reglerspannung $U_{R2}$, so erscheint am Ausgang des Komparators 8 Minuspotential. Am Arbeitswiderstand 7 fällt Spannung ab, das Minuspotential gelangt über die Treiberschaltung 16 zum Feldeffekttransistor 17 und sperrt ihn.

Bei dem Schaltregler bzw. Durchflußwandler nach Fig. 1 kann die Ausgangsspannung U2 kontinuierlich verringert werden. Dabei ist der Schaltregler für eine Temperaturregelung mit Peltier-Element vorgesehen.

Überbrückt man bei diesem Schaltregler die RC-Parallelschaltung 4, 5, so ergibt sich als Vergleichsspannung eine Dreieckspannung nach Fig. 3.

Fig. 3 zeigt die Eingangsspannung des als Regelumsetzer dienenden Komparators 8. Die von dem als Temperaturregler dienenden Differenzverstärker 11 gelieferte verstärkte Regelabweichung bzw. Reglerspannung $U_{R1}$ kann sich innerhalb des Arbeitsbereiches A1 ändern und überstreicht die Amplitude der Dreieckspannung $U_{D1}$ am Komparator 8 vollständig, so daß zusammen mit der übrigen Steuerschaltung durchaus die Eckwerte der Ausgangsspannung U2 zwischen Null und der sich bei einem Tastgrad 0,5 ergebenden halben Eingangsspannung U1 möglich sind. Eine bestimmte gleiche Änderung der Reglerspannung $U_{R1}$ verursacht aber bei kleinem Tastgrad bei Arbeitspunkt a1 prozentual erheblich größere Änderungen als bei großem Tastgrad entsprechend Arbeitspunkt b1. Die Folge ist Instabilität bei geringer Kühlleistung, wenn die Verstärkung des Differenzverstärkers 11 entsprechend der erforderlichen Genauigkeit bei großer Kühlleistung festgelegt wurde.

Wenn die Reglerspannung $U_{R1}$ von unten in den Bereich der Dreieckspannung $U_{D1}$ eintritt, beginnt der Komparator 8 zu arbeiten und bewirkt die Abschaltung des Feldeffekttransistors 17 über den Widerstand 7 und die Treiberschaltung 16. Seine Schaltzeit beträgt z. B. ca. 0,4 µs. Das bedeutet z. B. bei einer Arbeitsfrequenz von 100 kHz und einer Eingangsspannung von 9 V, daß die Spannung am Peltier-Element 21 schlagartig von Null auf ca. 0,35 V springt. Wird weniger Leistung benötigt, stellt sich ein aussetzender Betrieb mit einer der großen thermischen Zeitkonstante entsprechenden Periodendauer ein. Diese kann z. B. im Sekundenbereich liegen. Die Reglerspannung schwingt mit entsprechender Frequenz, weil auch die gemessene Temperatur ständig Schwankungen aufweist. Aufgrund einer Art Hysterese führt erst ein wesentlicher Anstieg der benötigten Kühlleistung wieder zum stabilen Betrieb.

Bei dem in Fig. 1 gezeigten Schaltregler mit RC-Parallelschaltung 4, 5 wird die zu große Empfindlichkeit bei kleinem Tastgrad durch einen nichtlinearen Verlauf der Vergleichsspannung am Komparator 8 beseitigt. Die nichtlineare Vergleichsspannung $U_{D1}$ gemäß Fig. 4 wird erreicht durch Reihenschaltung des RC-Gliedes 4, 5 kleiner Zeitkonstante mit dem Integrationskondensator 6, an dem unverändert eine weitgehend lineare Spannungsänderung gegeben ist.

Der Widerstand 3 dient als Ladewiderstand für die Kondensatoren 5 und 6. Zunächst wird der Kondensator 5 mit einer relativ kleinen Zeitkonstante, gegeben durch die Zeitkonstante des RC-Gliedes 3, 5 aufgeladen. Im weiteren Verlauf der Vergleichsspannung $U_{D2}$ ist die Zeitkonstante des RC-Gliedes 3, 4, 6 wirksam. Diese Zeitkonstante ist insbesondere etwa um den Faktor 20 größer als die kleinere Zeitkonstante des RC-Gliedes 3, 5. Das Verhältnis der Widerstände 3 und 4 definiert eine Spannungsteilung, aus der sich die Amplitude der Spannung am Kondensator 5 ergibt.

Die Gesamtspannung bzw. nichtlineare Vergleichsspannung $U_{D2}$ ermöglicht eine Optimierung der Verstärkung des Differenzverstärkers 11, die die geforderte Genauigkeit bei Stabilität im gesamten Arbeitsbereich A2 gewährleistet.

Der Schaltregler bzw. Durchflußwandler nach Fig. 2 stimmt weitgehend mit dem nach Fig. 1 überein. Abweichend von Fig. 1 ist anstelle des Widerstandes 7 der zwischen dem Pluspol der Eingangsspannung $U_E$ und dem Eingang der Treiberschaltung 16 angeordnete Widerstand 23 vorgesehen. Außerdem ist zusätzlich zum Komparator 8 der zusätzliche Komparator 22 vorhanden. Der Zusätzliche Komparator 22 liegt mit seinem Minuseingang am Verbindungspunkt der RC-Parallelschaltung 4, 5 mit dem Kondensator 6. Der Pluseingang des Komparators 22 liegt am Ausgang des Rechteckgenerators 2.

Am Minuseingang des Komparators 22 liegt die Spannung des Kondensators 6, die um einen mittleren Wert schwankt. Die Verwendung dieser Spannung gestattet es, einen Spannungsteiler zur Erzeugung einer Hilfsspannung einzusparen.

Beide Komparatoren 8 und 22 liegen mit ihren Versorgungsspannungseingängen an der Eingangsspannung $U_E$. Beide Komparatoren 8 und 22 haben einen Offenen-Kollektor-Ausgang. Die Parallelschaltung der Ausgänge der Komparatoren liegt unmittelbar am Eingang der Treiberschaltung 16.

Während bei der Schaltung nach Fig. 1 das Durchschalten des Feldeffekt-Leistungstransistors 17 direkt von dem als Taktgeber dienenden Rechteckgenerator 2 über den Widerstand 7 und die Treiberschaltung 16, das Sperren dagegen über den Komparator 8 erfolgt, wird bei dem Schaltregler nach Fig. 2 das Einschalten über den Widerstand 23 und den zusätzlichen Komparator 22 vorgenommen. Beide Komparatoren 8 und 22 sind zweckmäßigerweise integrierte Schaltungen, die Bestandteil ein und derselben Chips sind.

Die Komparatoren 8 und 22 haben am Ausgang den Zustand hochohmig bzw. HIGH oder niederohmig gegen Minuspotential bzw. LOW. Sind beide Komparatoren 8 und 22 am Ausgang hochohmig, so gelangt über den Widerstand 23 und die Treiberschaltung 16 Einschaltpotential zur Steuerelektrode des Feldeffekttransistors 17. Ist einer der beiden Komparatoren 8 und 22 an seinem Ausgang niederohmig gegen Minuspotential, so gelangt über die Treiberschaltung 16 Sperrpotential zum Feldeffekttransistor 17.

Während der Sperrphase des Schaltreglers, d. h. während der Impulspause am Ausgang des Rechteckgenerators 2 gibt der Komparator 22 an seinem Ausgang Sperrpotential LOW ab. Zu Beginn des positiven Rechteckimpulses am Ausgang des Rechteckgenerators 2 schaltet der Komparator 22 vom Zustand LOW zum Zustand HIGH um und schaltet den Feldeffekttransistor 17 ein. Dieser bleibt solange eingeschaltet, bis die Vergleichsspannung $U_{D2}$ am Minuseingang des Komparators 8 auf den Wert der Reglerspannung $U_{R2}$ angestiegen ist, so daß der Komparator 8 am Ausgang in den Zustand LOW übergeht und den Feldeffekttransistor sperrt.

Wie aus Fig. 4 hervorgeht, steigt die Vergleichsspannung — beginnend mit ihrem Minimalwert — im unteren Drittel der ersten Halbperiode zunächst steil an und geht dann in einen etwa linearen Verlauf mit geringerer Steigung über. Die zweite Halbperiode beginnt im ersten Drittel mit einem steilen Abfall, der dann in einen linearen Bereich mit kleinerer negativer Steigung übergeht. Die Dauer der ersten Halbperiode ist gleich der maximalen Einschaltdauer $t_{on\ max}$ des elektronischen Schalters. Die prozentuale Änderung der Einschaltdauer $\Delta t/t_{on}$ ist für die Arbeitspunkte a und b etwa gleich groß.

Tritt die Reglerspannung von unten in den Bereich der modifizierten Dreieckspannung $U_{D2}$ nach Fig. 4 ein, so werden beim Übergang des Ausgangs des Rechteckgenerators 2 von LOW nach HIGH gleichzeitig die Übergänge des Ausgangs des Komparators 22 von LOW nach HIGH und des Ausgangs des Komparators 8 von HIGH nach LOW eingeleitet.

Der passive Übergang des Komparators 22 von LOW nach HIGH verläuft zwangsläufig etwas langsamer als der aktive Übergang des Komparators 8 von HIGH nach LOW. Damit ist eine Kompensation im Bauteil selbst gegeben, die nicht von zusätzlichen Toleranzen äußerer Bauteile abhängt.

Der in Fig. 2 gezeigte Schaltregler ermöglicht damit eine kontinuierliche Leistungsabgabe an das Peltier-Element ohne Sprungstelle und ausgehend vom Wert Null.

Mit Hilfe des Peltier-Elementes wird ein Körper gekühlt, der eine Laserdiode trägt. Die Temperatur des gekühlten Körpers wird mit Hilfe des temperaturabhängigen Widerstandes 14 gemessen. Steigt die Temperatur des zu kühlenden Körpers, so wird der Wert des Widerstandes 14 kleiner und der Pluseingang des Differenzverstärkers 11 erhält ein zu positiven Werten hin verschobenes Potential. Der Gegenkopplungswiderstand 10 hebt das Potential am Minuseingang ebenfalls etwas in Richtung zu positiven Spannungen hin an. Das Potential am Pluseingang des Komparators 8 wird ebenfalls in positiver Richtung verschoben, so daß mehr Zeit verstreicht, bis die Vergleichsspannung $U_{D2}$ in ihrem zeitlichen Verlauf auf den Wert der Reglerspannung $U_{R2}$ angewachsen ist und den Komparator 8 veranlaßt, den Schalttransistor 17 auszuschalten.

Das Peltier-Element 21 stellt einen konstanten Lastwiderstand dar, dessen Leistung in Abhängigkeit von einer Temperatur gesteuert wird. Bei anderen Anwendungsfällen des Schaltreglers werden die Drehzahl eines Lüftermotors in Abhängigkeit von einer Temperatur oder das Drehmoment eines zu Antriebszwecken dienenden Gleichstrommotors in Abhängigkeit von der Zugspannung eines durch den Motor bewegten Fadens gesteuert oder die Helligkeit einer Lampe geregelt.

Als Schaltmittel 2, 8, 22, 11 und 16 finden z. B. folgende integrierte Schaltkreise Verwendung:

Rechteckgenerator 2 : TDB 0555 ;
Komparator 8 : ⎫
Komparator 22 : ⎬ LM 393
Differenzverstärker 11 : 1/2 LM 358
Treiberschaltung 16 : 4050 B

Der Impulsformer 2...6 ist z. B. wie folgt bemessen :

Widerstand 3 : 4,3 k$\Omega$
Widerstand 4 : 1,8 k$\Omega$
Kondensator 5 : 150 pF
Kondensator 6 : 3,3 nF

**Patentansprüche**

1. Schaltregler mit einem elektronischen Schalter (16, 17) und mit einem Differenzverstärker (11), dessen Eingängen eine von einem Istwert abhängige Größe und ein Sollwert zugeführt sind und mit einem Komparator (8), dessen Eingänge an den Ausgang des Differenzverstärkers (11) und an den Ausgang eines Vergleichsgrößengebers angeschlossen sind, wobei der Vergleichsgrößengeber eine periodische Vergleichsgröße mit vorgegebenem zeitlichen Verlauf abgibt und der elektronische Schalter (16, 17) mit Hilfe eines Taktgebers (2) zu vorgegebenen Einschaltzeitpunkten periodisch einschaltbar und jeweils zu einem mit Hilfe des Komparators (8) bestimmten Zeitpunkt ausschaltbar ist, dadurch gekennzeichnet, daß bei Steuerung des Istwertes durch Ausgangsspannungen des Schaltreglers, die zwischen einem Maximalwert und Null liegen können, der Vergleichsspannungsgeber einen als RC-Netzwerk ausgebildeten Impulsformer zur Erzeugung eines nichtlinearen zeitlichen Verlaufs der Vergleichsspannung ($U_D$) enthält, bei dem der für den Vergleich mit der Reglerspannung maßgebliche Ast der Vergleichsspannung in einem auf den Einschaltzeitpunkt folgenden ersten Zeitabschnitt eine erste Zeitkonstante und in einem sich an den ersten Zeitabschnitt anschließenden zweiten Zeitabschnitt eine zweite, gegenüber der ersten Zeitkonstante größere Zeitkonstante für den zeitlichen Verlauf der Vergleichsspannung bestimmend ist.

2. Schaltregler nach Anspruch 1, dadurch gekennzeichnet, daß der Vergleichsgrößengeber aus einem Rechteckgenerator (2) mit daran angeschlossenem Impulsformer besteht.

3. Schaltregler nach Anspruch 2, dadurch gekennzeichnet, daß der Impulsformer eine Serienschaltung aus einem Widerstand (3), aus einer RC-Parallelschaltung (4, 5) und aus einem weiteren Kondensator (6) enthält.

4. Schaltregler nach Anspruch 2, dadurch gekennzeichnet, daß der Ausgang des Rechteckgenerators (2) über einen Entkopplungswiderstand (7) und der als Offener-Kollektor-Ausgang ausgebildete Ausgang des Komparators (8) unmittelbar an den Eingang des elektronischen Schalters (16, 17) geführt sind.

5. Schaltregler nach einem der Ansprüche 2 bis 4, dadurch gekennzeichnet, daß der Taktgeber zum periodischen Einschalten des elektronischen Schalters (16, 17) einen Komparator (22) enthält, dessen Eingänge an den Rechteckgenerator (2) und an eine Hilfsspannungsquelle angeschlossen sind.

6. Schaltregler nach Anspruch 5, dadurch gekennzeichnet, daß die Hilfsspannungsquelle durch den Kondensator (6) der Serienschaltung des Impulsformers gebildet ist.

7. Verwendung eines Schaltregler nach einem der Ansprüche 1 bis 6 zur Speisung eines Peltier-Elementes (21) wobei die konstant zu haltende Regelgröße die Temperatur eines durch das Peltier-Element (21) kühlbaren Körpers ist.

**Claims**

1. A switching regulator comprising an electronic switch (16, 17) and a differential amplifier (11), the inputs of which are supplied with a value dependent upon an actual value and a theoretical value, and a comparator (8) whose inputs are connected to the output of the differential amplifier (11) and to the output of a comparison value generator, where the comparison value generator emits a periodic comparison value having a predetermined time curve, and the electronic switch (16, 17) is periodically switched on at predetermined switch-on times by a clock pulse generator (2), and switched off at a time determined by the comparator (8), characterised in that the actual value is controlled by output voltages of the switching regulator which occur between a maximum value and zero, the comparison voltage generator contains a pulse shaper which consists of an RC-network and generates a non-linear time curve of the comparison voltage ($U_D$), wherein for the comparison with the regulator voltage, in a definite arm of the comparison voltage, the time curve of the comparison voltage is governed by a first time constant in a first time section which follows the switch-on time, and by a second time constant greater than the first time constant, in a second time section which follows the first time section.

2. A switching regulator as claimed in Claim 1, characterised in that the comparison value generator consists of a rectangular wave-form generator (2) connected to a pulse shaper.

3. A switching regulator as claimed in Claim 2, characterised in that the pulse shaper contains a series circuit composed of a resistor (3), a parallel-RC combination (4, 5) and a further capacitor (6).

4. A switching regulator as claimed in Claim 2, characterised in that the output of the rectangular waveform generator (2) leads to the input of the electronic switch (16, 17) via a decoupling resistor (7), and the output of the comparator, which is an open-collector output, leads directly to the input of the electronic switch (16, 17).

5. A switching regulator as claimed in one of Claims 2 to 4, characterised in that for the periodic switching-on of the electronic switch (16, 17) the clock pulse generator contains a comparator (22) whose inputs are connected to the rectangular waveform generator (2) and to an auxiliary voltage source.

6. A switching regulator as claimed in Claim 5, characterised in that the auxiliary voltage source is formed by the capacitor (6) of the series circuit of the pulse shaper.

7. A switching regulator as claimed in one of Claims 1 to 6, when used for supplying a Peltier-effect element (21), where the regulated value to be maintained constant is the temperature of a component cooled by the Peltier-effect element (21).

## Revendications

1. Régulateur à commutation comprenant un interrupteur électronique (16, 17) et un amplificateur différenciateur (11), aux entrées duquel sont appliquées une grandeur fonction d'une valeur réelle et une valeur de consigne, ainsi qu'un comparateur (8) dont les entrées sont connectées à la sortie de l'amplificateur différenciateur (11) et à la sortie d'un générateur de grandeur de comparaison, générateur qui délivre une grandeur de comparaison périodique ayant une allure temporelle préfixée, l'interrupteur électronique (16, 17) pouvant être enclenché périodiquement à des instants d'enclenchement prévus à l'aide d'une horloge (2), et pouvant être déclenché à un instant fixé par le comparateur (8), caractérisé en ce que, lors de la commande de la valeur réelle par des tensions de sortie du régulateur à commutation, tensions qui peuvent être comprises entre une valeur maximale et nulle, le générateur de tension de comparaison contient un formateur d'impulsions réalisé comme un réseau RC pour produire une allure temporelle non linéaire de la tension de comparaison ($U_D$) où, dans le tronçon de la tension de comparaison prépondérant pour la comparaison avec la tension du régulateur, une première constante de temps est déterminante pour l'allure temporelle de la tension de comparaison dans un premier intervalle de temps faisant suite à l'instant d'enclenchement et une seconde constante de temps, plus grande que la première, est déterminante pour l'allure temporelle de la tension de comparaison dans un second intervalle de temps se raccordant au premier intervalle de temps.

2. Régulateur selon la revendication 1, caractérisé en ce que le générateur de grandeur de comparaison est constitué d'un générateur rectangle (2) auquel est raccordé un formateur d'impulsions.

3. Régulateur selon la revendication 2, caractérisé en ce que le formateur d'impulsions contient le montage en série d'une résistance (3), d'un circuit RC parallèle (4, 5) et d'un autre condensateur (6).

4. Régulateur selon la revendication 2, caractérisé en ce que la sortie du générateur rectangle (2) est reliée à travers une résistance de découplage (7) à l'entrée de l'interrupteur électronique (16, 17), et la sortie du comparateur (8), réalisée comme une sortie à collecteur ouvert, est reliée directement à l'entrée de cet interrupteur.

5. Régulateur selon une des revendications 2 à 4, caractérisé en ce que l'horloge contient, pour l'enclenchement périodique de l'interrupteur électronique (16, 17), un comparateur (22) dont les entrées sont connectées au générateur rectangle (2) et à une source de tension auxiliaire.

6. Régulateur selon la revendication 5, caractérisé en ce que la source de tension auxiliaire est formée par le condensateur (6) du montage en série du formateur d'impulsions.

7. Utilisation d'un régulateur à commutation selon une des revendications 1 à 6 pour l'alimentation d'un élément Peltier (21), dans laquelle la grandeur réglée à maintenir constante est la température d'un corps susceptible d'être refroidi par l'élément Peltier (21).

# FIG 1

# FIG 2

FIG 3

FIG 4